# EUROPEAN PATENT SPECIFICATION

(11) **EP 1 732 072 B1**
(45) Date of publication and mention of the grant of the patent: **22.10.2008**
(21) Application number: 06114549.6
(22) Date of filing: 25.05.2006
(51) Int. Cl.: G11B 7/125

(54) **OPC-performing method restudying optical source drive characteristics after OPC recording and OPC measurement and optical recording/reproducing apparatus using the same**
OPC-Verfahren mit erneuter Untersuchung der Eigenschaften der optischen Quelle nach der OPC-Aufzeichnung und OPC-Messung sowie optisches Aufzeichnungs-/Wiedergabegerät dafür
Procédé de réalisation d'une mission de coordination OPC réanalysant les caractéristiques de la commande de source optique après l'enregistrement OPC, la mesure OPC et l'appareil d'enregistrement/de reproduction optique utilisant ce procédé

(30) Priority: 01.06.2005 KR 2005046673
(43) Date of publication of application: 13.12.2006
(73) Proprietor: SAMSUNG ELECTRONICS CO., LTD., Suwon-si, Gyeonggi-do (KR)
(72) Inventor: Yu, Jin-woo 101-912, Wooseong Apartment, Suwon-si (KR); Otsuka, Tatsuhiro 102-903 Jugong Green Ville Apt., Suwon-si (KR); Ko, Jong-jin, Seoul (KR)
(74) Representative: Waddington, Richard

(56) References cited:
- EP-A- 0 712 120
- US-A- 5 563 862
- US-A1- 2004 179 451

## Description

The present invention relates to optical recording media and an optical recording/reproducing apparatus employing the same, and more particularly to an OPC-performing method restudying optical source drive characteristics after an optimum power control (OPC) recording and OPC measurement, and an optical recording/reproducing apparatus using the same.

Recording media such as optical discs have been developed and commercialized to record and store image data and sound data with improved performance for a long period of time. Such optical disks can be classified as either compact disks (CDs) or digital versatile disks (DVD) according to data recording capacity. Examples of optical disks that can be recorded, deleted, and reproduced include 650 MB CD-Rs, CD-rewritables (RWs), 4.7 GB DVD+R/RWs, DVD-random access memories (RAMs), and DVD-R/RWs. Examples of optical disks that are dedicated for data reproduction include 650 MB CDs and 4.7 GB DVD-read only memories (ROMs). In addition, due to limitations in increasing storage capacity of the conventional DVD-ROM, standardization for new high-density optical discs, for example, blue-ray discs (BDs) and HD-DVD, has been rapidly advanced.

When data is recorded on a high-density optical disc, an optimum power control (OPC) procedure is performed to determine an optimum recording power for recording data on an associated optical disc, i.e., the best recording laser power setting for each optical disc and a recording/reproducing apparatus combination.

In general, before recording data onto an optical disc, the optical recording/reproducing apparatus performs an OPC procedure over a test recording area of the optical disc. Through an OPC performance, an optimum LD drive level is determined in order for optical beams of an optimum recording power to be emitted from a laser diode (LD).

The OPC procedure has a series of steps, including: (1) studying drive characteristics of a laser diode (LD); (2) performing OPC recording as test recording while driving the laser diode (LD) based on the drive characteristics; (3) performing OPC measurement for measurement of an OPC recording state; and (4) performing OPC calculation for determination of an optimum LD drive level based on a result of the OPC measurement and the LD drive characteristics.

However, the OPC recording and the OPC measurement often increase a temperature of the laser diode (LD). If the temperature of the laser diode (LD) rises, the LD drive characteristics also change. Despite the change to the LD drive characteristics as described above, the OPC calculation is performed based on the LD drive characteristics detected before any change of the temperature of the laser diode (LD).

Since the OPC calculation is not performed based on the LD drive characteristics detected after the temperature of the laser diode (LD) rises as described above, the optimum LD drive level is often assessed incorrectly. If the laser diode (LD) is driven according to an inaccurate, or incorrect optimum LD drive level, optical beams of an inaccurate optimum recording power are emitted, which results in a higher error occurrence possibility in recording data on an optical disc

US 2004/0179451 discloses a system that requires a predetermined target value for a laser diode drive level.

EP-A-0 712 120 describes an OPC method, wherein an automated power control (APC) procedure is used.

Various aspects and example embodiments of the present invention advantageously provide an OPC-performing method and an optical recording/reproducing apparatus employing the same, which, in order to prevent error occurrence possibility from high density optical discs, perform OPC calculation based on optical source drive characteristics based on an update analysis of drive characteristics of an optical source changed in temperature due to OPC recording and OPC measurement.

Additional aspects and/or advantages of the invention will be set forth in part in the description which follows and, in part, will be obvious from the description, or may be learned by practice of the invention.

According to the present invention there is provided an apparatus and method as set forth in the appended claims. Preferred features of the invention will be apparent from the dependent claims, and the description which follows.

In addition to the example embodiments and aspects as described above, further aspects and embodiments of the present invention will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the invention are limited only by the terms of the appended claims. The following represents brief descriptions of the drawings, wherein:
FIG. 1 is a block diagram of an example optical recording/reproducing apparatus for performing an OPC through restudying optical source drive characteristics after OPC recording and OPC measurement according to an embodiment of the present invention;
FIG. 2 is a flow chart for explaining an OPC-performing method for restudying optical source drive characteristics after completing OPC recording and OPC measuring according to an embodiment of the present invention; and
FIGS. 3A-3B show example recording power measurement power correlations, at block S260 shown in FIG. 2.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

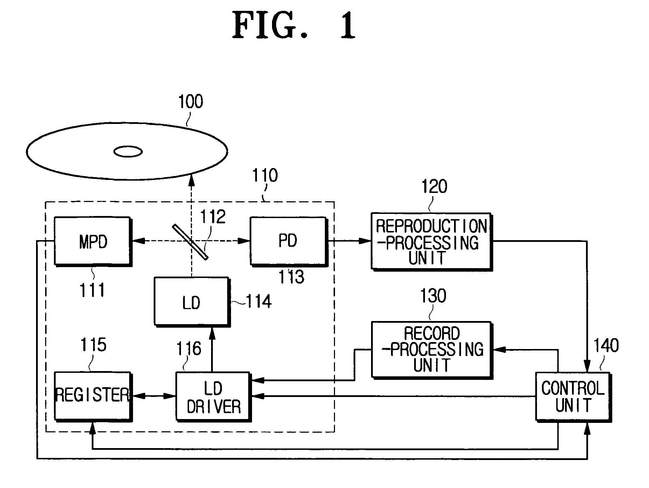

FIG. 1 is a block diagram of an example optical recording/reproducing apparatus according to an embodiment of the present invention. In FIG. 1, the flow lines shown in solid lines denote paths of electrical signals such as a drive signal, control signal, information signal, and the like, and the flow lines shown in dotted lines denote paths of optical beams.

In performing an optimum power control or calibration (OPC), the optical recording/reproducing apparatus performs the studying of optical source drive characteristics again after completing OPC recording and OPC measurement, and performs OPC calculation based on the optical source drive characteristics updated through the restudying. The studying of the optical source drive characteristics is repeated between the OPC recording/measurement and the OPC calculation so as to obtain optical source drive characteristics changed in temperature due to the OPC recording/measurement and to use the obtained optical source drive characteristics for the OPC calculation.

As shown in FIG. 1, the optical recording/reproducing apparatus comprises an optical disc 100, an optical pickup unit 110, a reproduction-processing unit 120, a record-processing unit 130, and control unit 140. In addition, other units such as a servo unit, a motor driver, a key-input unit and a memory may also be arranged but not shown. For purposes of brevity, the optical recording/reproducing apparatus, albeit in whole or in part, can also be referred to as a drive system which can be internal (housed within a host) or external (housed in a separate box that connects to a host). The optical disc can be any high-density medium, such as blue-ray disc (BD), high-density DVD (HD DVD) and other advanced optical disc (AOD); however, other optical discs can also be utilized, including DVD, DVD-R, DVD-RW, DVD+RW, DVD-RAM, DVD-ROM, CD, CD-R, CD-RW, and CD-ROM. In addition, such an optical recording/reproducing apparatus may be a single apparatus, or may be separated into a recording apparatus (i.e., digital video disc recorder "DVDR") and a reading apparatus (i.e., compact disc player "CDP" or digital video disc player "DVDP").

The optical pickup unit 110 records target data outputted from the record-processing unit 130 onto a mounted optical disc 100. In addition, the optical pickup unit 110 reads data recorded on the optical disc 100, and outputs an electrical signal corresponding to the read data to the reproduction-processing unit 120.

The optical pickup unit 110 includes a monitor photo diode (MPD) 111, a beam splitter 112, a photo diode (PD) 113, a laser diode (LD) 114, a memory, such as a register 115, and an LD driver 116.

The laser diode (LD) 114 is an optical source used for selectively emitting optical recording beams or optical reproduction beams. As described herein, the "recording beams" are optical beams used for recording data onto the mounted optical disc 100, and the "reproduction beams" are optical beams used for reading data recorded on the optical disc 100.

The LD driver 116 drives the laser diode (LD) 114 according to a LD drive level set in the register 115. That is, the LD driver 116 generates an LD drive signal based on the LD drive level set in the register 115, and drives the laser diode (LD) 114 to generate an optical beam in accordance with the generated LD drive signal.

The beam splitter 112 splits an optical beam emitted from the LD 114 (hereinafter, referred to as "an LD emission beam") into two optical beams. In detail, the beam splitter 120 transmits 70∼80% of the LD emission beam to the optical disc 100, and reflects 20∼30% of the LD emission beam to the monitor photo diode (MPD) 111. Hereinafter, for the sake of convenience, the LD emission beam transmitted from the beam splitter 112 to the optical disc 100 is referred in short to as "a TD beam" (To Disk Beam), and the LD emission beam reflected from the beam splitter 112 to the MPD 111 is referred in brief to as "a TM beam" (To MPD beam).

The monitor photo diode (MPD) 111 measures an optical power of the TM beam, and transfers a result of the measurement to the control unit 140. The photo diode (PD) 113 converts into an electric signal, the TD beam reflected again from the beam splitter 112 after reflected from the optical disc 100, and applies the electric signal to the reproduction-processing unit 120.

The control unit 140 controls overall operations of the present optical recording/reproducing apparatus. Specifically, the control unit 140 controls an optimum power control (OPC) procedure of the optical recording/reproducing apparatus in order to determine an optimum recording power for recording data on an optical disc 100, particularly, after the LD drive characteristics vary according to temperature changes of the laser diode (LD). Parameters used to perform the OPC procedure are typically stored in the memory, such as, the register 115, and can be accessed by the control unit 140 prior to performing the OPC procedure.

In detail, upon termination of (i) the analysis of LD drive characteristics of a laser diode (LD), (ii) the OPC recording, and (iii) the OPC measurement, the control unit 140 restudies or re-analyze (iv) the LD drive characteristics, and (v) performs the OPC calculation based on the LD drive characteristics updated. This is why the LD drive characteristics analysis is repeated between (iii) the OPC measurement and (v) the OPC calculation to (iv) obtain LD drive characteristics as updated and changed in temperature due to (ii) the OPC recording and (iii) the OPC measurement and (v) use the LD drive characteristics for the OPC calculation.

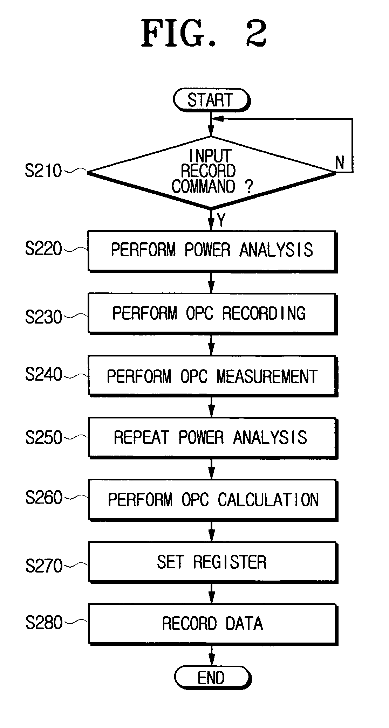

Hereinafter, an OPC procedure controlled by the control unit 140 will be described in detail with reference to FIG. 2. FIG. 2 is a flow chart for explaining an OPC procedure through the re-analysis of the optical source drive characteristics after completions of the OPC recording and OPC measurement.

Further, hereinafter, for the sake of convenience, the term "LD drive level-measurement power correlation" is introduced as the LD drive characteristics indicating the optical source drive characteristics, which is correlation between an LD drive level and optical power of TM beams measured at the monitor photo diode (MPD) 111 (hereafter, referred to as "measurement power") when the laser diode (LD) 114 is driven according to the LD drive level. Further, studying of the LD drive level-measurement power correlation is referred in brief to as "power analysis."

As shown in FIG. 2, if a record command is inputted as a command for recording data on an optical disc 100 at block S210, the control unit 140 controls operations of the optical pickup unit 110, including an optimum power control (OPC) procedure to determine an optimum recording power for recording data on an optical disc 100, even when the LD drive characteristics vary according to temperature changes of the laser diode (LD) 114. Specifically, upon receipt of an input record command, the control unit 140 performs a power analysis, that is, to study the power of an optical source, i.e., drive characteristics of a laser diode (LD) 114 at block S220. Through the power analysis, the control unit 140 obtains a LD drive level-measurement power correlation. For purposes of making a distinction with another LD drive level-measurement power correlation obtained through block S250 which will be later described, the LD drive level-measurement power correlation obtained through block S220 is referred to as a first LD drive level-measurement power correlation.

Next, the control unit 140 controls the operations of the pickup unit 110 to perform the OPC recording at block S230. The OPC recording refers to test recording for an OPC, and, in detail, refers to the test recording in a test recording area provided on the optical disc 100, while varying an optical power of the recording beam emitted from the laser diode (LD) 114 (hereafter, referred in brief to as "recording power"). When the OPC recording is performed at block S230, the first LD drive level-measurement power correlation is used which is obtained through block S220.

During the OPC recording procedure at block S230, the control unit 140 obtains a recording power-measurement power correlation as a correlation between the recording power and the measurement power through the measurement power outputted from the monitor photo diode (MPD) 111. The recording power/measurement power correlation refers to the correlation between the recording power and the measured power outputted from the monitor photo diode (MPD) 111 when the optical beam of the recording power is outputted from the laser diode (LD) 114.

Next, the control unit 140 performs the OPC measuring by using a reproduction signal applied through the optical pickup unit 110 and the reproduction-processing unit 120 at block S240. The OPC measurement refers to the measurement of an OPC recording state as state of the OPC recording performed at block S230. The control unit 140 obtains the OPC recording state through the OPC measurement at block S240.

After the OPC recording at block S230 and the OPC measurement at block S240, the control unit 140 controls the operations of the optical pickup unit 110 to repeat the power analysis at block S250. The control unit 140 obtains a second LD drive level-measurement power correlation that is different from the first LD drive level-measurement power correlation through the repetition of the power analysis at block S250.

The second LD drive level-measurement power correlation obtained through block S250 becomes different from the first LD drive level-measurement power correlation obtained through block S220, since the temperature of the laser diode (LD) 114 has been increased due to the OPC recording at block S230 and the OPC measurement at block S240. The measurement power becomes varied if the temperature of the laser diode (LD) 114 changes, even though the LD drive level remains the same.

Next, the control unit 140 performs the OPC calculation at block S260. The OPC calculation refers to determination of an optimum LD drive level based on the recording power/measurement power correlation obtained through block S230, the OPC recording state obtained through block S240, and the second LD drive level-measurement power correlation obtained through block S250. The optimum LD drive level represents an LD drive level for an optical beam of an optimum recording power to be emitted from the laser diode (LD) 114, shown in FIG. 1.

In more detail, during block S260, the control unit 140 determines (i) an optimum recording power based on the OPC recording state, calculates (ii) the measurement power outputted from the monitor photo diode (MPD) 111 when the optical beams of the determined optimum recording power are emitted from the laser diode (LD) 114 based on the recording power-measurement power correlation, and determines (iii) a LD drive level corresponding to the calculated measurement power as an optimum LD drive level based on the second LD drive level-measurement power correlation.

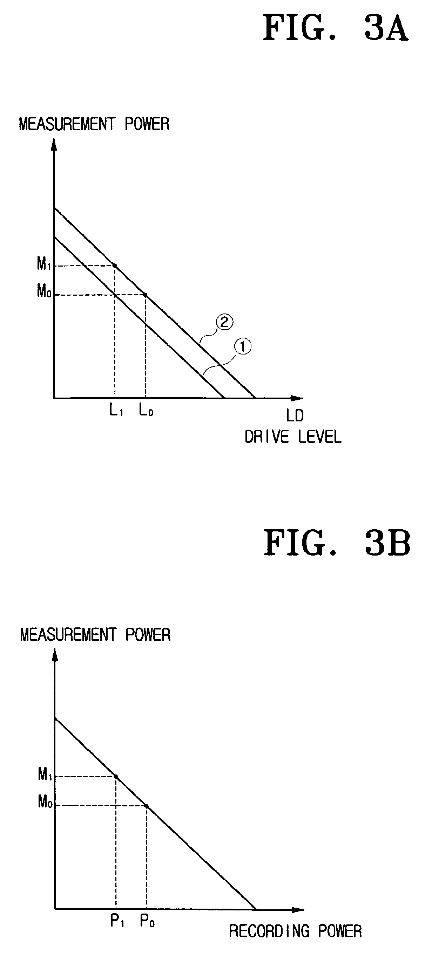

For additional explanation at block S260, FIG. 3A shows an example correlation between different optical source (i.e., laser diode "LD") drive levels and a measurement power obtained when an optical source (i.e., laser diode "LD") is driven according to the optical source drive level. FIG. 3B shows an example correlation between an optimum recording power and a measurement power.

Specifically, FIG. 3A shows the first LD drive level-measurement power correlation ① and the second LD drive level-measurement power correlation ②, and FIG. 3B shows the recording power-measurement power correlation.

It can be seen from FIGS. 3A-3B, if an optimum recording power is determined at "P₀" and an optical beam at "P₀" is emitted from the laser diode (LD) 114, the measurement power outputted from the monitor photo diode (MPD) 111 corresponds to a measurement power "M₀" according to the recording power-measurement power correlation shown in FIG. 3B. Further, it can be seen from FIGS. 3A-3B that the LD drive level at "M₀" is determined at "L₀", according to the second LD drive level-measurement power correlation ② shown in FIG. 3A.

If the first LD drive level-measurement power correlation ① is used as described in typical OPC procedure, the LD drive level at "M₀" is determined at "L₁" rather than at "L₀", as shown in FIG. 3A. However, since the temperature of the laser diode (LD) 114 has been increased due to the OPC recording at block S230 and the OPC measurement at block S240, the laser diode (LD) 114 operates according to the second LD drive level-measurement power correlation ②. Accordingly, if the laser diode (LD) 114 is driven at L₁", the recording power becomes "P₁" rather than the optimum recording power "P₀", as shown in FIG. 3B, since the measurement power corresponding to "L₁" is "M₁" according to the second LD drive level-measurement power correlation ② and the recording power corresponding to "M₁" is "P₁" according to the recording power-measurement power correlation.

When block S260 is completed, the control unit 140 sets an optimum LD drive level determined through the OPC calculation into the register 115 at block S270.

Next, the control unit 140 controls the operations of the optical pickup unit 110 and the record-processing unit 130 to record data on the optical disc 100 at block S280. During block S280, the data is recorded in optimum conditions since the LD driver 116 drives the laser diode (LD) 114 according to an optimum LD drive level set in the register 115.

So far, description has been made in detail on the procedures of restudying the LD drive level-measurement power correlation, after the OPC recording and OPC measurement, and determining the optimum LD drive level through the OPC calculation based on the LD drive level-measurement power correlation updated through the restudying or re-analysis.

Description has been made on the present embodiments with the LD drive level-measurement power correlation taken as the optical source drive characteristics for example, for convenient explanation. Accordingly, the present invention can be applied with different optical source drive characteristics rather than the LD drive level-measurement power correlation.

Further, the present invention is appropriate when the temperature of an optical source is highly increased due to the OPC recording performed with relatively high recording power, as in OPC performance over a blu-ray disk (BD). However, the present invention is not limited to the above, but can be applicable to all optical discs, including a digital versatile disc (DVD), a compact disc (CD), and high-density DVD (HD-DVD), including any other optical discs.

As described above, the present invention can restudy or re-analyze the optical source drive characteristics changed in temperature due to the OPC recording and the OPC measurement, and perform the OPC calculation based on the updated optical source drive characteristics. As a result, an optical recording/reproducing apparatus according to the present invention can accurately determine an optimum optical source drive level since the OPC calculation is performed based on the optical source drive characteristics after the temperature of an optical source (i.e., laser diode "LD") has increased. Likewise, error occurrence possibility in recording data onto an optical disc can be reduced, if not eliminated, thereby enabling an optical source to be driven according to an accurate optimum optical source drive level and optical beams of the accurate optimum recording power to be emitted from the optical source.

While the present invention has been particularly shown and described with reference to exemplary embodiments thereof, it will be understood by those of ordinary skill in the art that various changes in form and details may be made therein without departing from the scope of the present invention. For example, other recording media, such as DVD, DVD-R, DVD-RW, DVD+RW, DVD-RAM, DVD-ROM, CD, CD-R, CD-RW, CD-ROM and other holographic data storage devices may be utilized, as long as the OPC is implemented in the manner as described with reference to FIG. 1, FIG. 2, and FIG. 3. In addition, a recording test zone can be fixed and/or flexible in designated areas of an optical disc. Likewise, the result of the power analysis at block S250, shown in FIG. 2, can be stored elsewhere in an example recording/reproducing apparatus, shown in FIG. 1. Similarly, the system controller (140) can be implemented as a chipset having firmware, or alternatively, a general or special purposed computer programmed to implement methods as described with reference to FIG. 2.

Accordingly, it is intended, therefore, that the present invention not be limited to the various example embodiments disclosed, but that the present invention includes all embodiments falling within the scope of the appended claims.

Although a few preferred embodiments have been shown and described, it will be appreciated by those skilled in the art that various changes and modifications might be made without departing from the scope of the invention, as defined in the appended claims.

## Claims

1. An optimum power control (OPC) performing method, comprising:
prior to an optimum power control recording operation, analyzing drive characteristics of an optical analyzing drive characteristics of an optical source (S220), said drive characteristics being a correlation between an optical source level and a power of an optical beam produced by the optical source (114),
performing optimum power control recording (S230), as test recording for optimum power control and optimum power control measurement (S240) as measurement of an optimum power control recording state;
re-analyzing drive characteristics of an optical source after the optimum power control recording and the optimum power control measurement (S250), and obtaining optical source drive characteristics; and
performing optimum power control calculation (S260) to determine an optimum optical source drive level as an optical source drive level for enabling an optical beam of an optimum recording power to be emitted from the optical source (114), based on the optimum power control recording state and the optical source drive characteristics obtained.

2. The method as claimed in claim 1, wherein the optical source drive characteristics vary according to temperature changes of the optical source (114).

3. The method as claimed in claim 2, wherein the optical source drive characteristics vary according to the temperature changes of the optical source (114) due to at least one of the optimum power control recording and the optimum power control measurement.

4. The method as claimed in any preceding claim, wherein the analysis and the re-analysis includes obtaining an optical source drive level-measurement power correlation as a correlation between the optical source drive level and the measurement power as an optical power measured when the optical source (114) is driven according to the optical source drive level.

5. The method as claimed in claim 4, wherein the optimum power control calculation comprises:
determining an optimum recording power based on the optimum power control recording state;
calculating the measurement power measured when an optical beam of the determined optimum recording power is emitted from the optical source (114); and
determining, as the optimum optical source drive level, an optical source drive level corresponding to the calculated measurement power based on the optical source drive level-measurement power correlation obtained.

6. The method as claimed in any preceding claim, further comprising pre-studying the optical source drive characteristics obtained before the optimum power control recording and the optimum power control measurement, wherein the optimum power control recording is performed based on the optical source drive characteristics obtained during the pre-studying.

7. An optical disc apparatus comprising:
an optical source (114) arranged to emit an optical beam used for recording data on an optical disc (100); and
a control unit (140), arranged to perform the method of claim 1.

8. The optical disc apparatus as claimed in claim 7, wherein the optical source drive characteristics vary according to temperature changes of the optical source (114).

9. The optical disc apparatus as claimed in claim 8, wherein the optical source drive characteristics vary according to the temperature changes of the optical source (114) due to at least one of the optimum power control recording and the optimum power control measurement.

10. The optical disc apparatus as claimed in any one of claims 7 to 9, wherein the control unit (140) is operable to obtain as the optical source drive characteristics, an optical source drive level-measurement power correlation indicating a correlation between the optical source drive level and the measurement power as an optical recording power measured when the optical source (114) is driven according to the optical source drive level.

11. The optical disc apparatus as claimed in claim 10, wherein the control unit (140) is operable to determine an optimum recording power based on the optimum power control recording state, to calculate the measurement power measured when an optical beam of the determined optimum recording power is emitted from the optical source (114), and to determine, as the optimum optical source drive level, an optical source drive level corresponding to the calculated measurement power based on the optical source drive level-measurement power correlation.

12. The optical disc apparatus as claimed in any one of claims 7 to 11, wherein the optimum power control recording is performed based on optical source drive characteristics obtained through the analysis of the drive characteristics of the optical source (114) before the optimum power control recording and the optimum power control measurement.

13. An apparatus as claimed in any one of claims 7 to 12 further comprising:
a memory (115) to store parameters to perform an optimum power control procedure.

## Patentansprüche

1. Verfahren zum Durchführen einer optimalen Leistungsregelung (OPC), mit den folgenden Schritten:
Analysieren von Ansteuereigenschaften einer optischen Quelle (S220) vor einer Aufzeichungsoperation optimaler Leistungsregelung; wobei die Ansteuereigenschaften eine Korrelation zwischen einem optischen Quellenpegel und einer Leistung eines durch die optische Quelle (114) produzierten optischen Strahls sind,
Durchführen einer Aufzeichung optimaler Leistungsregelung (S230) als Testaufzeichnung zur optimalen Leistungsregelung und einer Messung optimaler Leistungsregelung (S240) als Messung eines Aufzeichungszustands optimaler Leistungsregelung;
Neuanalysieren von Ansteuereigenschaften einer optischen Quelle nach der Aufzeichung optimaler Leistungsregelung und der Messung optimaler Leistungsregelung (S250) und Erhalten von Ansteuereigenschaften optischer Quellen; und
Durchführen einer Berechnung optimaler Leistungsregelung (S260), um einen optimalen Ansteuerpegel optischer Quellen als einen Ansteuerpegel optischer Quellen zur Ermöglichung der Emission eines optischen Strahls mit optimaler Aufzeichungsleistung aus der optischen Quelle (114) auf der Basis des erhaltenen Aufzeichungszustands optimaler Leistungsregelung und der erhaltenen Ansteuereigenschaften optischer Quellen zu bestimmen.

2. Verfahren nach Anspruch 1, wobei die Ansteuereigenschaften optischer Quellen gemäß Temperaturänderungen der optischen Quelle (114) variieren.

3. Verfahren nach Anspruch 2, wobei die Ansteuereigenschaften optischer Quellen gemäß den Temperaturänderungen der optischen Quelle (114) aufgrund der Aufzeichung optimaler Leistungsregelung und/oder der Messung optimaler Leistungsregelung variieren.

4. Verfahren nach einem der vorhergehenden Ansprüche, wobei die Analyse und die Neuanalyse umfassen, eine Ansteuerpegelmessungs-Leistungskorrelation optischer Quellen als Korrelation zwischen dem Ansteuerpegel optischer Quellen und der Messungsleistung als einer optischen Leistung, die gemessen wird, wenn die optische Quelle (114) gemäß dem Ansteuerpegel optischer Quellen angesteuert wird, zu erhalten.

5. Verfahren nach Anspruch 4, wobei die Berechnung optimaler Leistungsregelung folgendes umfaßt:
Bestimmen einer optimalen Aufzeichungsleistung auf der Basis des Aufzeichungszustands optimaler Leistungsregelung;
Berechnen der Messungsleistung, die gemessen wird, wenn ein optischer Strahl der bestimmten optimalen Aufzeichungsleistung aus der optischen Quelle (114) emittiert wird; und
Bestimmen eines der berechneten Messungsleistung entsprechenden Ansteuerpegels optischer Quellen auf der Basis der erhaltenen Ansteuerpegelmessungs-Leistungskorrelation optischer Quellen als den optimalen Ansteuerpegel optischer Quellen.

6. Verfahren nach einem der vorhergehenden Ansprüche, ferner mit dem Schritt des Voruntersuchens der vor der Aufzeichung optimaler Leistungsregelung und der Messung optimaler Leistungsregelung erhaltenen Ansteuereigenschaften optischer Quellen, wobei die Aufzeichung optimaler Leistungsregelung auf der Basis der während des Voruntersuchens erhaltenen Ansteuereigenschaften optischer Quellen durchgeführt wird.

7. Optische Plattenvorrichtung, umfassend:
eine optische Quelle (114), die dafür ausgelegt ist, einen zum Aufzeichnen von Daten auf einer optischen Platte (100) verwendeten optischen Strahl zu emittieren; und
eine Steuereinheit (140), die dafür ausgelegt ist, das Verfahren von Anspruch 1 auszuführen.

8. Optische Plattenvorrichtung nach Anspruch 7, wobei die Ansteuereigenschaften optischer Quellen gemäß Temperaturänderungen der optischen Quelle (114) variieren.

9. Optische Plattenvorrichtung nach Anspruch 8, wobei die Ansteuereigenschaften optischer Quellen gemäß den Temperaturänderungen der optischen Quelle (114) aufgrund der Aufzeichung optimaler Leistungsregelung und/oder der Messung optimaler Leistungsregelung variieren.

10. Optische Plattenvorrichtung nach einem der Ansprüche 7 bis 9, wobei die Steuereinheit (140) betreibbar ist, um als die Ansteuereigenschaften optischer Quellen eine Ansteuerpegelmessungs-Leistungskorrelation optischer Quellen zu erhalten, die eine Korrelation zwischen dem Ansteuerpegel optischer Quellen und der Messungsleistung als einer optischen Aufzeichnungsleistung, die gemessen wird, wenn die optische Quelle (114) gemäß dem Ansteuerpegel optischer Quellen angesteuert wird, angibt.

11. Optische Plattenvorrichtung nach Anspruch 10, wobei die Steuereinheit (140) betreibbar ist, um eine optimale Aufzeichungsleistung auf der Basis des Aufzeichungszustands optimaler Leistungsregelung zu bestimmen, die Messungsleistung zu berechnen, die gemessen wird, wenn ein optischer Strahl der bestimmten optimalen Aufzeichungsleistung aus der optischen Quelle (114) emittiert wird, und einen der berechneten Messungsleistung entsprechenden Ansteuerpegel optischer Quellen auf der Basis der erhaltenen Ansteuerpegelmessungs-Leistungskorrelation optischer Quellen als den optimalen Ansteuerpegel optischer Quellen zu bestimmen.

12. Optische Plattenvorrichtung nach einem der Ansprüche 7 bis 11, wobei die Aufzeichung optimaler Leistungsregelung auf der Basis von Ansteuereigenschaften optischer Quellen durchgeführt wird, die durch die Analyse der Ansteuereigenschaften der optischen Quelle (114) vor der Aufzeichung optimaler Leistungsregelung und der Messung optimaler Leistungsregelung erhalten werden.

13. Vorrichtung nach einem der Ansprüche 7 bis 12, ferner umfassend:
einen Speicher (115) zum Speichern von Parametern zur Durchführung einer Prozedur der optimalen Leistungsregelung.

## Revendications

1. Procédé d'exécution de commande de puissance optimale (OPC) comprenant :
avant une opération d'enregistrement à commande de puissance optimale, l'analyse des caractéristiques d'excitation d'une source optique (S220) ; lesdites caractéristiques d'excitation étant une corrélation entre un niveau de source optique et une puissance d'un faisceau optique produit par la source optique (114) ;
l'exécution d'un enregistrement à commande de puissance optimale (S230) comme enregistrement d'essai pour une commande de puissance optimale et d'une mesure à commande de puissance optimale (S240) comme mesure d'un état d'enregistrement à commande de puissance optimale ;
la nouvelle analyse des caractéristiques d'excitation d'une source optique après l'enregistrement à commande de puissance optimale et la mesure à commande de puissance optimale (S250), et l'obtention de caractéristiques d'excitation de la source optique ; et
l'exécution d'un calcul de commande de puissance optimale (S260) pour déterminer un niveau d'excitation optimal de la source optique comme niveau d'excitation de source optique pour permettre à un faisceau optique d'une puissance d'enregistrement optimale d'être émis depuis la source optique (114) en se basant sur l'état d'enregistrement à commande de puissance optimale et sur les caractéristiques d'excitation de la source optique obtenues.

2. Procédé tel que revendiqué dans la revendication 1, dans lequel les caractéristiques d'excitation de la source optique varient suivant les changements de température de la source optique (114).

3. Procédé tel que revendiqué dans la revendication 2, dans lequel les caractéristiques d'excitation de la source optique varient suivant les changements de température de la source optique (114) causés par au moins soit l'enregistrement à commande de puissance optimale, soit la mesure à commande de puissance optimale.

4. Procédé tel que revendiqué dans l'une quelconque des revendications précédentes, dans lequel l'analyse et la nouvelle analyse comprennent l'obtention d'une corrélation niveau d'excitation de source optique - puissance de mesure comme corrélation entre le niveau d'excitation de la source optique et la puissance de mesure comme puissance optique mesurée lorsque la source optique (114) est excitée conformément au niveau d'excitation de la source optique.

5. Procédé tel que revendiqué dans la revendication 4, dans lequel le calcul de la commande de puissance optimale comprend :
la détermination d'une puissance d'enregistrement optimale en se basant sur l'état d'enregistrement à commande de puissance nominale ;
le calcul de la puissance de mesure mesurée lorsqu'un faisceau optique de la puissance d'enregistrement optimum déterminée est émis depuis la source optique (114) ; et
la détermination, comme le niveau d'excitation optimal de la source optique, d'un niveau d'excitation de la source optique correspondant à la puissance de mesure calculée basée sur la corrélation obtenue entre le niveau d'excitation de la source optique et la puissance de mesure.

6. Procédé tel que revendiqué dans l'une quelconque des revendications précédentes, comprenant en outre l'étude préalable des caractéristiques d'excitation de la source optique obtenues avant l'enregistrement à commande de puissance optimale et la mesure à commande de puissance optimale, dans lequel l'enregistrement à commande de puissance optimale est effectué en se basant sur les caractéristiques d'excitation de la source optique obtenues pendant l'étude préalable.

7. Appareil à disque optique comprenant :
une source optique (114) agencée de façon à émettre un faisceau optique utilisé pour enregistrer des données sur un disque optique (100) ; et
un dispositif de commande (140), agencé de façon à exécuter le procédé de la revendication 1.

8. Appareil à disque optique tel que revendiqué dans la revendication 7, dans lequel les caractéristiques d'excitation de la source optique varient suivant les changements de température de la source optique (114).

9. Appareil à disque optique tel que revendiqué dans la revendication 8, dans lequel les caractéristiques d'excitation de la source optique varient suivant les changements de température de la source optique (114) causés par au moins soit l'enregistrement à commande de puissance optimale, soit la mesure à commande de puissance optimale.

10. Appareil à disque optique tel que revendiqué dans l'une quelconque des revendications 7 à 9, dans lequel le dispositif de commande (140) peut être utilisé de façon à obtenir, comme caractéristiques d'excitation de la source optique, une corrélation niveau d'excitation de source optique - puissance de mesure indiquant une corrélation entre le niveau d'excitation de la source optique et la puissance de mesure comme puissance d'enregistrement optique mesurée lorsque la source optique (114) est excitée conformément au niveau d'excitation de la source optique.

11. Appareil à disque optique tel que revendiqué dans la revendication 10, dans lequel le dispositif de commande (140) peut être utilisé pour déterminer une puissance d'enregistrement optimale basée sur l'état d'enregistrement à commande de puissance optimale, pour calculer la puissance de mesure mesurée lorsqu'un faisceau optique de la puissance d'enregistrement optimale déterminée est émis depuis la source optique (114), et pour déterminer, comme le niveau d'excitation optimal de la source optique, un niveau d'excitation de la source optique correspondant à la puissance de mesure calculée basée sur la corrélation entre le niveau d'excitation de la source optique et la puissance de mesure.

12. Appareil à disque optique tel que revendiqué dans l'une quelconque des revendications 7 à 11, dans lequel l'enregistrement à commande de puissance optimale est effectué en se basant sur des caractéristiques d'excitation de source optique obtenues grâce à l'analyse des caractéristiques d'excitation de la source optique (114) avant l'enregistrement à commande de puissance optimale et la mesure à commande de puissance optimale.

13. Appareil tel que revendiqué dans l'une quelconque des revendications 7 à 12, comprenant en outre :
une mémoire (115) pour stocker des paramètres afin d'effectuer une procédure de commande de puissance optimale.
